# EUROPÄISCHE PATENTSCHRIFT

(11) **EP 1 915 265 B1**
(45) Veröffentlichungstag und Bekanntmachung des Hinweises auf die Patenterteilung: **22.07.2009**
(21) Anmeldenummer: 06742363.2
(22) Anmeldetag: 22.05.2006
(51) Int. Cl.: B60H 1/00

(54) **VORRICHTUNG ZUM KLIMATISIEREN IN KRAFTFAHRZEUGEN**
AIR CONDITIONING APPARATUS FOR MOTOR VEHICLES
DISPOSITIF DE CLIMATISATION POUR DES VEHICULES AUTOMOBILES

(30) Priorität: 18.10.2005 DE 102005050098; 25.05.2005 DE 102005024616
(43) Veröffentlichungstag der Anmeldung: 30.04.2008
(73) Patentinhaber: Spheros GmbH, 82205 Gilching (DE)
(72) Erfinder: SCHEID, Helmut, 86920 Denklingen (DE)
(74) Vertreter: Strasser, Wolfgang
(86) Internationale Anmeldenummer: PCT/DE2006/000880
(87) Internationale Veröffentlichungsnummer: WO 2006/125421

(56) Entgegenhaltungen:
- EP-A- 0 411 375
- US-A- 2 978 972
- US-A- 5 626 386
- US-B1- 6 478 369

## Beschreibung

Die Erfindung betrifft eine Vorrichtung zum Klimatisieren in Kraftfahrzeugen mit mindestens zwei hintereinander angeordneten, in Fahrzeuglängsrichtung verschiebbaren Fahrzeugsitzen und mindestens einer zentralen Klimaeinheit mit einem mit der Klimaeinheit verbundenen Luftverteilungssystem.

In Kraftfahrzeugen zur Beförderung von Fahrgästen, zum Beispiel in Bussen und Kleinbussen, wird das Innenraumklima häufig durch eine generelle, für den ganzen Raum vorgegebene Temperatur bestimmt. Dazu werden üblicherweise im Dachbereich über die gesamte Länge des Kraftfahrzeugs Luftkanäle angebracht, die über ein zentrales Klimagerät, das beispielsweise entweder im Dachbereich oder auf dem Dach montiert ist, mit gekühlter oder beheizter Luft beschickt werden. Die Luftverteilung erfolgt über permanente Lüftungsöffnungen und/oder zusätzlich über verschließbare und verstellbare Lüftungsdüsen. Neben den Lüftungskanälen im Dachbereich sind im Inneren des Busses seitlich über die gesamte Länge des Bodens auch Konvektoren oder durch Gebläse unterstützte Heizwärmetauscher angebracht, die sowohl Wärme in den Seitenbereich abstrahlen als auch erwärmte Luft in den Bodenbereich blasen. Die im Bodenbereich zugeführte Luft wird nicht gekühlt, sondern nur beheizt.

Eine individuelle Steuerung der Behaglichkeit kann häufig nur über die Lüftungsdüsen realisiert werden, die sich im Luftkanal im Dachbereich befinden. Diese Düsen erlauben es, dass durch Öffnen beziehungsweise Verschließen sowie das Verstellen der Ausblasrichtung eine mehr oder weniger große Luftmenge in Richtung auf den Kopf geblasen wird. Die Temperatur der aus der Düse strömenden Luft ist für alle Fahrgäste im Innenraum des Kraftfahrzeugs identisch und kann vom Fahrgast nicht beeinflusst werden. Außer im Kopfbereich kann der Fahrgast keinen anderen Körperbereich mit temperierter Luft versorgen. Insbesondere im Brust- und vor allem im Fußbereich muss sich der Fahrgast mit der für den gesamten Bus durch ein Steuer- und Regelsystem vorgegebenen Temperatur und Luftmenge zufrieden geben.

Ein weiterer Nachteil der heute üblichen Beheizung des Bodenbereichs für Doppel- oder Dreifachsitze ist, dass der nahe zur Heizung sitzende Fahrgast immer mehr Wärme bekommt als der von der Heizung weiter entfernt sitzende. Auch ist es dem Fahrgast nicht möglich, Einfluss auf das gewünschte individuelle Klima zu nehmen.

Um diese Probleme zu vermeiden, ist gemäß der EP 0 411 375 A1 vorgesehen, dass die Vorrichtung zum Klimatisieren in Kraftfahrzeugen eine in den Fahrzeugsitzen angeordnete Luftaustrittsvorrichtung aufweist, wobei die Luftaustrittsvorrichtung das Klima für den jeweils auf dem dahinter angeordneten Fahrzeugsitz befindlichen Insassen beeinflusst, und das Luftverteilungssystem mindestens einen fest im Fahrzeug angeordneten Zentralluftkanal und jeweils einen einem Fahrzeugsitz zugeordneten Zentralluftkanal mit der Luftaustrittsvorrichtung verbindenden Verbindungsluftkanal aufweist, wobei zwischen dem Zentralluftkanal und dem Verbindungsluftkanal eine variable Kanalverbindung angeordnet ist, durch die der Verbindungsluftkanal derart gegenüber dem Zentralluftkanal verschiebbar ist, dass bei einer Verschiebung des dem Verbindungsluftkanal zugeordneten Fahrzeugsitzes eine permanente luftdichte Verbindung zwischen Zentralluftkanal und Verbindungsluftkanal besteht.

Nachteilig an dieser bekannten Anordnung ist, dass die durch einen vorderen Fahrzeugsitz geführte Luft aus diesem nicht nur in Richtung des Insassen austritt, der sich auf dem dahinter angeordneten Sitz befindet, sondern auch durch die Sitz- und Rückenpolsterung dieses vorderen Sitzes austritt und somit den auf diesem Sitz befindlichen Insassen umströmt. Es wird also immer zumindest zwei Fahrgästen gleichzeitig dieselbe temperierte Luft zugeführt, so dass es nicht möglich ist, für jeden Fahrgast ein individuelles Klima bereitzustellen.

Auch ist bei dieser bekannten Vorrichtung die variable Kanalverbindung zwischen Zentralluftkanal und dem Verbindungsluftkanal in Form einer balgartigen Schlauchverbindung ausgebildet, die zwar eine Verschiebbarkeit des Fahrzeugsitzes gegenüber dem Zentralluftkanal ermöglicht, aber schwierig zu montieren ist und ein hohes Beschädigungsrisiko aufweist.

Demgegenüber liegt der Erfindung die Aufgabe zugrunde, eine Vorrichtung der eingangs genannten Art so weiter zu bilden, dass die variable Kanalverbindung zwischen Zentralluftkanal und dem zum jeweiligen Fahrzeugsitz gehörenden Verbindungsluftkanal auf einfache Weise montiert werden kann, ein geringes Beschädigungsrisiko aufweist und zuverlässig arbeitet, so dass es möglich wird, für jeden Fahrgast ein individuelles Klima bereitzustellen.

Zur Lösung dieser Aufgabe sieht die Erfindung die im Anspruch 1 zusammengefassten Merkmale vor.

Durch diese Ausbildung der variablen Kanalverbindung wird erreicht, dass der durch die Bürsten- bzw. Lippendichtung zu verschließende Längsspalt im Zentralluftkanal nur eine geringe Höhe aufweisen muss, wodurch eine gute Dichtfunktion sichergestellt wird; gleichzeitig ist der Luftkanalquerschnitt des Verbindungsluftkanalendstücks im Wesentlichen gleich dem des Verbindungsluftkanals, so dass kein erhöhter Strömungswiderstand überwunden werden muss.

In einer bevorzugten Ausführungsform weist die variable Kanalverbindung eine Bürstendichtung auf, die am Zentralluftkanal angeordnet ist. Damit wird sichergestellt, dass der Verbindungsluftkanal gegenüber dem Zentralluftkanal leicht verschiebbar ist und dennoch auch bei Verschiebung des dem Verbindungsluftkanal zugeordneten Fahrzeugsitzes eine permanente luftdichte Verbindung zwischen Zentralluftkanal und Verbindungsluftkanal erhalten bleibt. Damit ist eine flexible Verschiebbarkeit der Fahrzeugsitze bei gleichzeitigem optimalen individuellen Klimakomfort für die Passagiere erreicht.

In einer weiteren bevorzugten Ausführungsform weist die variable Kanalverbindung eine Lippendichtung auf, die am Zentralluftkanal angeordnet ist. Wie bei der Bürstendichtung erlaubt auch die Lippendichtung eine Verschiebung des Verbindungsluftkanals gegenüber dem Zentralluftkanal. Auch hier kann eine permanente luftdichte Verbindung zwischen Zentralluftkanal und Verbindungsluftkanal sichergestellt werden, wenn der dem Fahrzeugsitz zugeordnete Verbindungsluftkanal gegenüber dem Zentralluftkanal verschoben wird.

Die Erfindung wird nachfolgend anhand von Ausführungsbeispielen näher erläutert, wobei auf Zeichnungen Bezug genommen wird. Die Zeichnungen zeigen:
- Fig. 1: eine perspektivische Darstellung des Inneren eines Kraftfahrzeugs, beispielsweise eines Reisebusses, mit mehreren Fahrzeugsitzen und zentralen Klimaeinheiten,
- Fig. 2: eine perspektivische Darstellung von zwei nebeneinander angeordneten Fahrzeugsitzen beispielsweise eines Reisebusses, und
- Fig. 3: eine perspektivische Darstellung eines Ausschnitts eines Luftverteilungssystems gemäß der Erfindung.

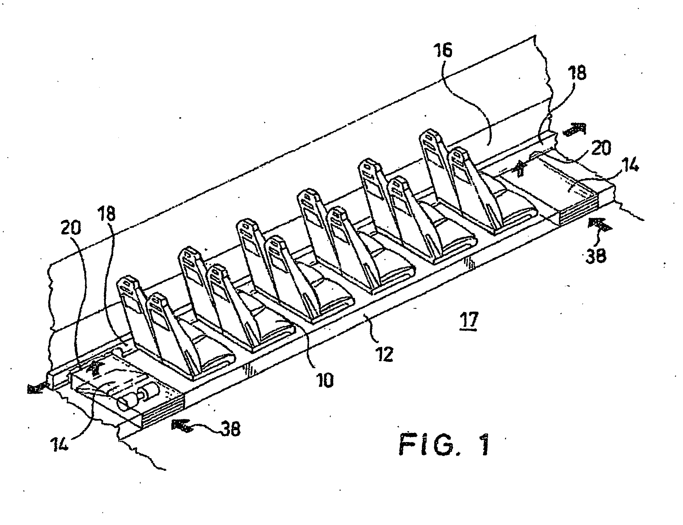

In Fig. 1 sind beispielhaft sechs hintereinander angeordnete Paare von Fahrzeugsitzen 10 beispielsweise eines Reisebusses gezeigt. Am vorderen und hinteren Ende der Reihe von Fahrzeugsitzen 10 sind jeweils im Bodenbereich 12 zentrale Klimaeinheiten 14 angeordnet, die Eintrittsluft 38 ansaugen können. In einem Seitenbereich 16 erstreckt sich über den gesamten Fahrzeuginnenraum 17 hinweg ein zentraler Luftkanal 18. In jeweils einem Verbindungsbereich 20 sind die zentralen Klimaeinheiten 14 jeweils mit dem Zentralluftkanal 18 verbunden.

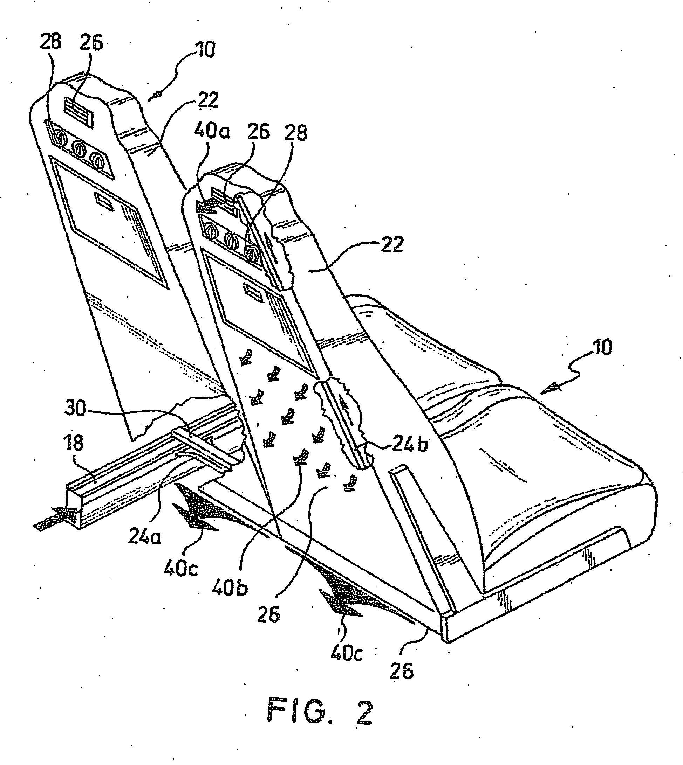

In Fig. 2 ist ein Paar von Fahrzeugsitzen 10 im Detail gezeigt. In einer Rückenlehne 22 jedes Fahrzeugsitzes 10 sind Einheiten zum Klimatisieren in Kraftfahrzeugen angeordnet, die im Weiteren näher beschrieben werden sollen. Über einen Verbindungsluftkanal 24 sind jeweils verschiedene in jedem Fahrzeugsitz 10 angeordnete Luftaustrittsvorrichtungen 26 mit dem Zentralluftkanal 18 verbunden. Der Zentralluftkanal 18 und die Verbindungsluftkanäle 24a, 24b bilden zusammen ein Luftverteilungssystem. Über eine Bedieneinrichtung 28, die am jeweils vor dem Fahrgast befindlichen Fahrzeugsitz 10 angebracht ist, kann jeder Fahrgast die Luftzufuhr individuell steuern. Der Zentralluftkanal 18 ist so ausgeführt, dass er einen Sitzträger 30 für jeweils ein Paar von Fahrzeugsitzen 10 aufnehmen kann und gleichzeitig eine lufttechnische Verbindung zwischen Zentralluftkanal 18 und Verbindungsluftkanal 24 erlaubt.

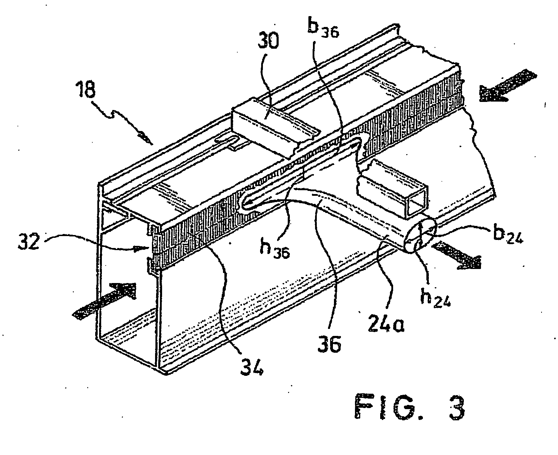

Eine Ausführungsform der variablen Kanalverbindung zwischen Zentralluftkanal 18 und Verbindungsluftkanal 24a ist in Fig. 3 im Detail dargestellt. Der Zentralluftkanal 18 weist eine über mindestens einen Teil der Länge des Kraftfahrzeugs hinweggehende Öffnung 32 auf, die durch eine aus Borsten bestehende Bürstendichtung 34 abgedeckt ist. Die Borsten der Bürstendichtung 34 schmiegen sich luftdicht an ein speziell ausgeformtes Verbindungsluftkanalendstück 36 an. Das Verbindungsluftkanalendstück 36 hat ein Verhältnis von Luftkanalbreite b₃₆ zu Luftkanalhöhe h₃₆, das deutlich größer, mindestens aber zweimal größer ist als das Verhältnis von Luftkanalbreite b₂₄ zu Luftkanalhöhe h₂₄ des Verbindungsluftkanals 24a, wobei jedoch der Luftkanalquerschnitt des Verbindungsluftkanalendstücks 36 gegenüber dem Verbindungsluftkanal 24a im Wesentlichen konstant bleibt. Durch diese spezielle Ausformung des Verbindungsluftkanalendstücks 36 wird in Verbindung mit den Borsten der Bürstendichtung 34 eine besonders gute Luftdichtheit erreicht.

Anstelle der Bürstendichtung 34 kann auch eine hier nicht weiter dargestellte Lippendichtung mit besonders flexiblen Gummi- oder Schaumprofilen verwendet werden.

Durch die vorgestellten variablen Kanalverbindungen zwischen dem Zentralluftkanal 18 und dem Verbindungsluftkanal 24a ist es nun möglich, Sitzabstände und Bestuhlungsvarianten unabhängig zu verändern, ohne dass am Zentralluftkanal 18 und den jeweils den Fahrzeugsitzen 10 zugeordneten Verbindungsluftkanälen 24a Änderungen vorgenommen werden müssen.

Im Folgenden soll noch die Funktionsweise der Vorrichtung zum Klimatisieren in Kraftfahrzeugen im Detail beschrieben werden.

Aus dem Bodenbereich 12 oder dem nicht dargestellten Kofferraum des Busses gelangt Eintrittsluft 38 in die zentralen Klimaeinheiten 14, wo sie je nach Anforderung erwärmt oder gekühlt wird (Figur 1). Die zentralen Klimaeinheiten 14 können zusätzlich noch mit Aktivfiltern, wie zum Beispiel Aktivkohlefiltern ausgerüstet sein. Die zentralen Klimaeinheiten 14 können entweder als reine Heizeinheiten oder als kombinierte Heiz-Kühleinheiten ausgeführt sein. Verfügt das Fahrzeug über einen Sekundärklimakreislauf, kann mit einem Wärmetauscher gekühlt und geheizt werden. Alternativ ist auch eine Kühlung über zusätzlich mit Kältemittel beaufschlagte Wärmetauscher möglich. Durch die Kühlkapazitäten, die nun zusätzlich über die zentralen Kühleinheiten 14 zur Verfügung stehen, können gegebenenfalls die im Dachbereich angeordneten Klimaeinheiten leichter und kleiner ausgeführt werden, wodurch sich der Bauraum reduziert und die ungünstige Gewichtsverteilung am Bus verbessert wird. Die konditionierte Luft strömt nun aus den zentralen Klimaeinheiten 14 in den Zentralluftkanal 18, von wo aus sie über die Verbindungsluftkanäle 24a, 24b in die Fahrzeugsitze 10 eingeleitet werden kann. Der Verbindungsluftkanal 24a reicht über alle einzelnen Sitze einer Zweier- oder Dreier-Fahrzeugsitzgruppe hinweg. Vom Verbindungsluftkanal 24a zweigen Verbindungsluftkanäle 24b zu den Sitzpolstern oder Rückseiten der Rückenlehnen 22 bis zu den Luftaustrittsvorrichtungen 26 ab. Über die Luftaustrittsvorrichtung 26 gelangt Austrittsluft 40a in den Kopf- und Brustbereich, Austrittsluft 40b in den Bauchbereich und Austrittsluft 40c in den Beinbereich. Die individuelle Bedieneinrichtung 28 jedes Fahrzeugsitzes 10 erlaubt dem Fahrgast den Bereich auszuwählen, der mit Austrittsluft versorgt werden soll, und so das Klima im Kopf-, Brust-, Bauch- und Beinbereich gezielt in individueller Weise zu beeinflussen. Eine ungewollte einseitige Wärmeeinbringung kann so verhindert werden. Ist eine Kühlung vorgesehen, so kann durch eine Zwangsschaltung auch ein nicht vom Fahrzeuginsassen beeinflussbares Verschließen ausgewählter Luftaustrittsvorrichtungen 26 vorgesehen werden. Es kann so verhindert werden, dass gekühlte Luft in den Beinbereich gelangt und die Behaglichkeit benachbarter Fahrgäste gestört wird. Sind einzelne Sitze nicht belegt, so kann dies beispielsweise durch im Fahrzeugsitz eingebrachte Sensoren festgestellt werden und die hiervon betroffenen Fahrzeugsitzplätze können komplett von der Luftzufuhr getrennt werden, wodurch die Beeinflussung von Nachbarssitzen unterbunden wird.

### Bezugszeichenliste

- 10: Fahrzeugsitz
- 12: Bodenbereich
- 14: Zentrale Klimaeinheit
- 16: Seitenbereich
- 17: Fahrzeuginnenraum
- 18: Zentralluftkanal
- 20: Verbindungsbereich
- 22: Rückenlehne
- 24a, b: Verbindungsluftkanal
- 26: Luftaustrittsvorrichtung
- 28: Bedieneinrichtung
- 30: Sitzträger
- 32: Öffnung
- 34: Bürstendichtung
- 36: Verbindungsluftkanalendstück
- 38: Eintrittsluft
- 40a, b, c: Austrittsluft

## Patentansprüche

1. Vorrichtung zum Klimatisieren in Kraftfahrzeugen mit mindestens zwei hintereinander angeordneten, in Fahrzeuglängsrichtung verschiebbaren Fahrzeugsitzen (10) und mindestens einer zentralen Klimaeinheit(14), einem mit der zentralen Klimaeinheit (14) verbundenen Luftverteilungssystem und einer in den Fahrzeugsitzen (10) angeordneten Luftaustrittsvorrichtung (26), wobei die Luftaustrittsvorrichtung (26) das Klima für den jeweils auf dem dahinter angeordneten Fahrzeugsitz (10) befindlichen Insassen beeinflusst, und das Luftverteilungssystem mindestens einen fest im Fahrzeug angeordneten Zentralluftkanal (18) und jeweils einen einem Fahrzeugsitz (10) zugeordneten, den Zentralluftkanal (18) mit der Luftaustrittsvorrichtung (26) verbindenden Verbindungsluftkanal (24a, 24b) aufweist, wobei zwischen dem Zentralluftkanal (18) und dem Verbindungsluftkanal (24a, 24b) eine variable Kanalverbindung angeordnet ist, durch die der Verbindungsluftkanal (24a, 24b) derart gegenüber dem Zentralluftkanal (18) verschiebbar ist, dass bei einer Verschiebung des dem Verbindungsluftkanal (24a, 24b) zugeordneten Fahrzeugsitzes (10) eine permanente luftdichte Verbindung zwischen Zentralluftkanal (18) und Verbindungsluftkanal (24a, 24b) besteht,
**dadurch gekennzeichnet, dass** die variable Kanalverbindung ein in den Zentralluftkanal (18) eingreifendes Verbindungsluftkanalendstück (36) umfasst, wobei das Verbindungsluftkanalendstück (36) ein Verhältnis von Luftkanalbreite zu Luftkanalhöhe aufweist, das mindestens zweimal größer ist als das Verhältnis von Luftkanalbreite zu Luftkanalhöhe des Verbindungsluftkanals (24a), wobei der Luftkanalquerschnitt des Verbindungsluftkanalendstücks (36) im wesentlichen gleich dem Luftkanalquerschnitt des Verbindungsluftkanals (24a) ist.

2. Vorrichtung zum Klimatisieren in Kraftfahrzeugen nach Anspruch 1, **dadurch gekennzeichnet, dass** die variable Kanalverbindung eine Bürstendichtung (34) aufweist die am Zentralluftkanal (18) angeordnet ist.

3. Vorrichtung zum Klimatisieren in Kraftfahrzeugen nach Anspruch 1, **dadurch gekennzeichnet, dass** die variable Kanalverbindung eine Lippendichtung aufweist, die am Zentralluftkanal (18) angeordnet ist.

## Claims

1. Apparatus for air conditioning in motor vehicles having at least two vehicle seats (10) arranged one behind the other and displaceable in the longitudinal direction of the vehicle and at least one central air conditioning unit (14), an air distribution system connected to the central air conditioning unit (14) and an air discharge device (26) arranged in the vehicle seats (10), wherein the air discharge device (26) influences the climate for the respective occupant on the vehicle seat (10) arranged therebehind, and the air distribution system has at least one central air duct (18) arranged fixedly in the vehicle and a respective connecting air duct (24a, 24b) which is associated with a vehicle seat (10) and connects the central air duct (18) to the air discharge device (26), wherein arranged between the central air duct (18) and the connecting air duct (24a, 24b) is a variable duct connection by which the connecting air duct (24a, 24b) is displaceable with respect to the central air duct (18) in such a way that upon a displacement of the vehicle seat (10) associated with the connecting air duct (24a, 24b), there is a permanent air-tight connection between the central air duct (18) and the connecting air duct (24a, 24b),
**characterised in that** the variable duct connection includes a connecting air duct end portion (36) engaging into the central air duct (18), wherein the connecting air duct end portion (36) is of a ratio of air duct width to air duct height, which is at least twice as great as the ratio of air duct width to air duct height of the connecting air duct (24a), wherein the air duct cross-section of the connecting air duct end portion (36) is substantially equal to the air duct cross-section of the connecting air duct (24a).

2. Apparatus for air conditioning in motor vehicles according to claim 1 **characterised in that** the variable duct connection has a brush seal (34) arranged on the central air duct (18).

3. Apparatus for air conditioning in motor vehicles according to claim 1 **characterised in that** the variable duct connection has a lip seal arranged on the central air duct (18).

## Revendications

1. Dispositif de climatisation de véhicules automobiles avec au moins deux sièges de véhicule (10) disposés l'un derrière l'autre, déplaçables dans le sens de la longueur du véhicule et au moins une unité centrale de climatisation (14), un système de distribution d'air relié à l'unité centrale de climatisation (14) et un dispositif de sortie d'air (26) prévu dans les sièges de véhicule (10), ledit dispositif de sortie d'air (26) influençant la climatisation pour le passager se trouvant sur chaque siège de véhicule (10) situé derrière, et le système de distribution d'air comportant au moins un canal d'air central (18) fixement monté dans le véhicule et un canal d'air de liaison (24a, 24b) affecté à un siège de véhicule (10) correspondant et raccordant le canal d'air central (18) au dispositif de sortie d'air (26), un raccord de canal variable étant prévu entre le canal d'air central (18) et le canal d'air de liaison (24a, 24b), au moyen duquel le canal d'air de liaison (24a, 24b) est déplaçable relativement au canal d'air central (18) de manière à former une liaison hermétique permanente entre le canal d'air central (18) et le canal d'air de liaison (24a, 24b) en cas de déplacement du siège de véhicule (10) relevant du canal d'air de liaison (24a, 24b),
**caractérisé en ce que** le raccord de canal variable comprend une pièce d'extrémité de canal d'air de liaison (36) s'engageant dans le canal d'air central (18), ladite pièce d'extrémité de canal d'air de liaison (36) présentant un rapport entre largeur de canal d'air et hauteur de canal d'air au moins deux fois supérieur au rapport entre largeur de canal d'air et hauteur de canal d'air du canal d'air de liaison (24a), la section de canal d'air de la pièce d'extrémité de canal d'air de liaison (36) étant sensiblement égale à la section de canal d'air du canal d'air de liaison (24a).

2. Dispositif de climatisation de véhicules automobiles selon la revendication 1, **caractérisé en ce que** le raccord de canal variable comporte un joint à brosses (34) disposé sur le canal d'air central (18).

3. Dispositif de climatisation de véhicules automobiles selon la revendication 1, **caractérisé en ce que** le raccord de canal variable comporte un joint à lèvres disposé sur le canal d'air central (18).
